# EUROPEAN PATENT APPLICATION

(11) **EP 4 311 607 A1**
(43) Date of publication of application: **31.01.2024**
(21) Application number: 23187387.8
(22) Date of filing: 24.07.2023
(51) Int. Cl.: B21D 5/08, B21D 35/00, B32B 15/01

(54) **A METAL SECTION AND A METHOD FOR MANUFACTURING THEREOF**

(30) Priority: 28.07.2022 PL 44185822
(71) Applicant: Metalkas S.A., 85-840 Bydgoszcz (PL)
(72) Inventor: GRZENIA, Adam, 86-031 Osielsko (PL); CIESLAK, Slawomir, 86-200 Chelmno (PL); SOLTYSIAK, Robert, 85-796 Bydgoszcz (PL); WRONKOWSKI, Piotr, 85-355 Bydgoszcz (PL)
(74) Representative: Kancelaria Eupatent.pl Sp. z.o.o

(57) **Abstract**

A metal section formed from a metal tape shaped to form a cross-sectional profile of the metal section, wherein the metal tape has a layered structure comprising: a base layer (11) formed of a first metal strip having a first width (D); and at least one reinforcement layer (12, 14, 15, 16) formed of at least one second metal strip having a second width (d), wherein the second width (d) is smaller than the first width (D), wherein the reinforcement layer (12, 14, 15, 16) is permanently bonded to the base layer (11) by means of bonding means (13).

## Description

### TECHNICAL FIELD

The present invention relates to a metal section and a method for manufacturing thereof. The metal section is particularly designed for use as a stiffening element in structures such as storage racks and metal cabinets.

### BACKGROUND ART

Metal sections, such as angle bars or channel bars (also known as profiles), serve as structural elements in objects such as storage racks, cabinets, tables, ladders, gates, and the like.

These metal sections are typically produced by shaping flat metal tapes through a longitudinal rolling process known as cold bending. This involves passing the metal tape through at least one pair of rollers, a convex and a concave, to shape the desired cross-sectional profile.

The load capacity of these metal sections is primarily dependent on the material from which they are made and the thickness of the walls of the metal section. While a larger wall thickness does result in higher load capacity, it also results in increased material costs. Therefore, it's beneficial to aim for an optimal structure that balances production costs, section weight, and the required load-bearing capacity to ensure the metal section has sufficient stiffness.

EP2212039B1 discloses a process for producing a profile with a cross section of different thicknesses from a flat metal strip by means of roll-profiling. In this process, a roller pair produces at least one first recess on at least one side of the metal strip, said recess being widened by following roller pairs with incrementally enlarged recess width to form a region with a reduced material thickness. In addition, regions of the flat metal strip which are arranged adjacent to the at least one recess are bent up before and/or during intervention by a roller pair.

There is a need to provide an alternative structure for metal sections with variable wall thickness and an alternative method for manufacturing thereof, to enable forming metal sections having desired properties.

### SUMMARY

The invention relates to a metal section formed from a metal tape shaped to form a cross-sectional profile of the metal section, wherein the metal tape has a layered structure comprising: a base layer formed of a first metal strip having a first width; and at least one reinforcement layer formed of at least one second metal strip having a second width, wherein the second width is smaller than the first width, wherein the reinforcement layer is permanently bonded to the base layer by means of bonding means.

By choosing appropriate widths and thicknesses for the layers of the metal tape, the mechanical properties of the metal section can be effectively tailored. This allows to achieve desired properties at specific points of the metal section, eliminating the need for milling or rolling steps (as used by prior art processes). This streamlining facilitates the production process of the tape and the metal sections manufactured therefrom.

The metal tape can be symmetrical with respect to its longitudinal axis, and wherein the layers are arranged such that the base layer and the reinforcement layer overlap within a central band, and wherein the base layer extends beyond the reinforcement layer within edge bands.

The metal tape can be symmetrical with respect to its longitudinal axis, and wherein layers are arranged such that the reinforcement layers are located at side edges of the base layer.

The metal tape can be asymmetrical with respect to its longitudinal axis.

The metal tape may further comprise at least one inner reinforcement layer between the reinforcement layer and the base layer, wherein the inner reinforcement layer has a third width that is smaller than the first width and larger than the second width. This approach enables greater optimization of the cross-sectional area of the tape and the metal sections produced from the tape. It allows to thicken the central band and potentially introduce an additional transition band with a thickness differing from both the central band and edge bands.

The layers of the metal tape have the same thickness or may have different thicknesses.

The bonding means of the layers may have a form of a welding joint, a soldering joint, a weld, an adhesive and/or rivets. Such bonds ensure that all the layers of the tape are permanently joined, thereby providing adequate strength to the tape and the metal sections made from it.

The bonding means may form a continuous bonding line or a series of point joints.

The invention also relates to a method for manufacturing a metal section. First, a metal tape is produced by: providing a first metal strip having a first width for use as a base layer of the tape, providing at least one second metal strip having a second width smaller than the first width for use as a tape reinforcement layer, arranging the strips to form a stack of longitudinally arranged layers, forming tape areas of different cross-sectional thickness, bonding the metal strips permanently with each other by bonding means to form the metal tape having a varying cross-sectional thickness. Next, the method involves forming the metal section from the metal tape by cold forming the metal tape, by introducing the metal tape into a forming station comprising a plurality of pairs of profiling rollers and guiding the metal tape through the profiling rollers, thereby gradually bending the tape to the desired cross-sectional shape of the metal section.

The use of a multilayer strip with variable cross-section thickness as an intermediate product for the production of metal sections eliminates the need for under-milling in the tape or additional rolling of parts that need to be thinner.

The method may further comprise providing at least one inner reinforcement layer between the reinforcement layer and the base layer, wherein the inner reinforcement layer has a third width smaller than the first width and larger than the second width.

The method may comprise bonding the metal strips by welding, adhesive welding and/or riveting. These bonding techniques maintain product strength while promoting efficient production.

The method may further comprise feeding the tape to be shaped through a length compensation station, wherein a buffer portion of the tape is formed. The formed tape buffer portion serves to control the tension of the tape between its unwinding side and a series of equipment downstream in the manufacturing setup, following the length compensation station.

### BRIEF DESCRIPTION OF THE DRAWINGS

The invention shown by means of example embodiments in a drawing, wherein:
Fig. 1 shows a first embodiment of a metal tape;
Fig. 2 shows a second embodiment of a metal tape;
Fig. 3 shows a third embodiment of a metal tape;
Fig. 4 shows a fourth embodiment of a metal tape;
Fig. 5 shows a manufacturing installation for manufacturing the metal tape;
Fig. 6 shows a manufacturing installation for manufacturing a metal section from the metal tape;
Fig. 7 shows a first embodiment of a metal section;
Fig. 8 shows a fifth embodiment of the metal tape;
Fig. 9 shows a second embodiment of the metal section.

### DETAILED DESCRIPTION

The following detailed description is of the best currently contemplated modes of carrying out the invention. The description is not to be taken in a limiting sense, but is made merely for the purpose of illustrating the general principles of the invention.

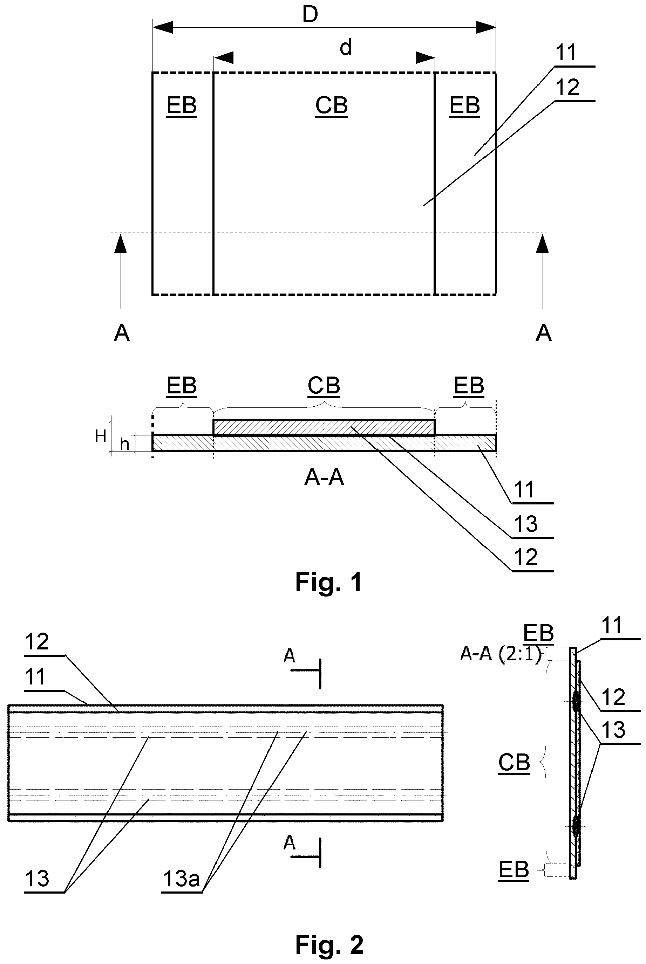

Metal sections are manufactured from a tape with a layered structure (therefore, the tape is an intermediate product used in the process for manufacturing the metal sections). The tape is composed of at least two metal strips 11, 12, which form the layers of the tape. These strips, differing in width and optionally in thickness, are bonded together to create a layered structure. The resulting tape has longitudinal areas of varying thickness, forming thinner edge bands EB and a thicker central band CB. Optionally, the tape may further comprise transition bands TB situated between the edge bands EB and the central band CB. The thickness of these transition bands is greater than the thickness of the edge bands EB but less than the thickness of the central band CB. These bands EB, TB, CB run longitudinally along the tape, preferably throughout its entire length. The metal strips 11, 12 overlap within the area of the central band CB. The wider metal strip 11 extends beyond the narrower metal strips 12, 14 within the edge bands EB and the transition bands TB. The metal strips 11, 12 and 14 are permanently bonded to create the layered structure of the metal tape, using bonding means 13. Preferably, the bonding means are in the form of welds, solders, heat seals, adhesives, or rivets. Fig. 1 shows a first embodiment of the metal tape. The tape comprises a base layer 11 having a width D, which defines the overall width of the tape, and a reinforcement layer 12 having a width d, which is smaller than the width of the tape.. Each layer 11, 12 is formed from a metal strip of the corresponding width (D, d). The base layer 11 and the reinforcement layer 12 are permanently bonded by bonding means 13, which in this embodiment take the form of an adhesive layer. The base layer 11 and the reinforcement layer 12 are positioned such that they overlap in the central band CB of the tape. Along the edge bands EB, extending longitudinally along the tape's edges, the base layer 11 extends beyond the reinforcement layer 12. As a result, the tape in the central band CB has a thickness H, corresponding to the combined thickness of the base layer 11 bonded with the reinforcement layer 12. In contrast, at the edge bands EB, the tape has a thickness corresponding to the thickness h of the base layer 11. Fig. 1 illustrates a tape with the base layer 11 and reinforcement layer 12 of equal thickness. However, it is also possible to manufacture a tape with a base layer 11 that has a different thickness from the reinforcement layer 12, depending on the intended applications of the strip and the desired shape of the cross-section of the metal sections produced from it.

Fig. 2 shows a second embodiment of the metal tape. The tape has a base layer 11 bonded with a reinforcement layer 12 - in the central band CB of the tape, by means of bonding means 13 in the form of a weld - in the form of an intermittent seam, that is, a series of short-segment welds 13a arranged along a welding line.

In other embodiments, the tape may have bonding means 13 in the form of a weld seam or solder seam. This could be an intermittent seam (consisting of a series of short-segment welds/solders arranged in a soldering/welding line) or a continuous weld seam, or solder seam in the form of an uninterrupted line of welds or solders, respectively. It can be also made by Friction Stir Welding (FSW).

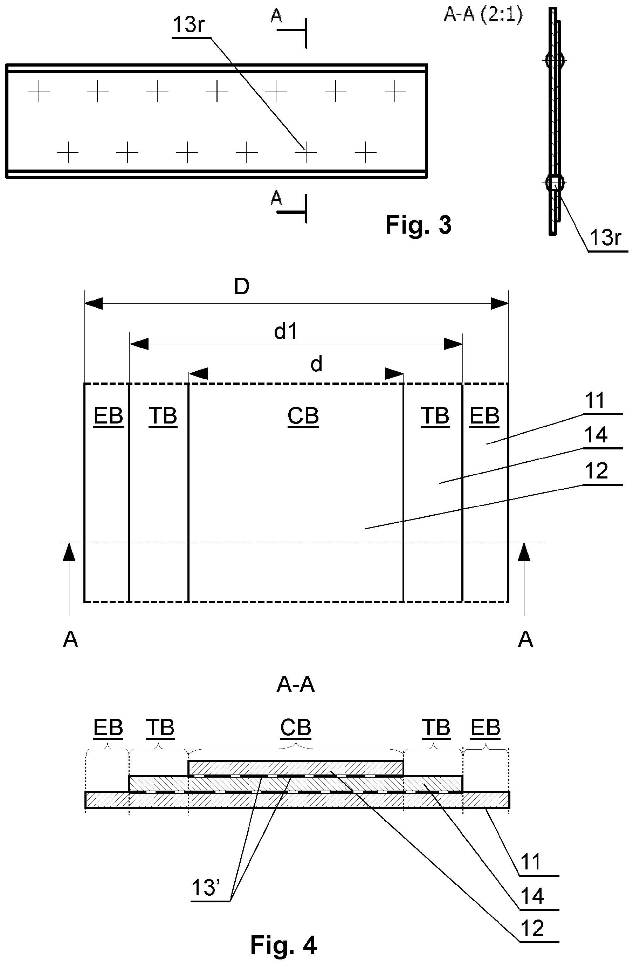

Alternatively, the tape may have bonding means 13 in the form of a continuous layer of adhesive, as schematically shown in Fig. 1, or a discontinuous layer of adhesive 13' (as shown schematically in Fig. 4). The discontinuous layer may consist of non-contiguous areas, for instance strips of adhesive spaced apart at regular intervals. As an addition to the aforementioned bonding means 13, or instead thereof, the strip may have layers 11, 12, 14 bonded by bonding means 13 in the form of rivets 13r, as shown schematically in Fig. 3 illustrating a third embodiment of the metal tape.

Fig. 4 shows a third embodiment of the metal tape. The tape is constructed of three metal strips: base layer 11, reinforcement layer 12 and inner reinforcement layer 14, located between them, in a layered structure. The inner reinforcement layer 14 has a width equal to d1, wherein d>d1 >D. In the tape structure, the layers are arranged such that all layers 11, 12, 14 overlap in the central band EB. However, in the edge bands CB, the base layer 11 extends beyond both the reinforcement layer 12 and the inner reinforcement layer 14. In addition, the reinforcement layers 12, 14 are situated in a way that defined two additional areas - in the form of transition bands TB. The transition bands TB run longitudinally along the tape, with each transition band TB extending along one of the edges of the tape, between the central band CB and the edge band EB. In the transition bands TB, the inner reinforcement layer 14 extends beyond the reinforcement layer 12. The tape of this embodiment has in the central band CB a thickness H corresponding to the thickness of the bonded all layers of the tape: 11, 14 and 12. In the transition bands TB, the tape has a thickness h1 corresponding to the thickness of the bonded reinforcement layers: 12, 14. In the edge bands EB the tape has a thickness h corresponding to the thickness of base layer EB. This design provides an additional variation in tape thickness across its cross-section, enabling further optimization of the tape's cross sectional profile.

In alternative designs of the three-layer tape, the inner reinforcement layer 14 could have a width of d1 = d, enabling the thickening of the central band CB without the need for forming transition bands TB.

Additionally, the tape layers 11, 12, and 14 may vary in thickness. As such, tapes with more diverse cross-sectional profiles can be produced from readily available raw materials (metal strips), which might have standardized dimensions in terms of thickness and width.

In yet other embodiments, the tape might comprise more than one inner reinforcement layer 14. For instance, the tape could have two, three, four, or even more inner reinforcement layers 14, arranged in a layered structure between the outer reinforcement layer 12 and the base layer 11. Each of these inner reinforcement layers 14 could have identical thickness and width, or they might differ from one another in terms of thickness and/or width. In the latter scenario, a tape with a greater variation in cross-sectional thickness can be achieved. Therefore, the selection of the quantity and dimensions of the inner reinforcement layers 14 offers a broad range of possibilities for optimizing the profile of the tape's cross-section, as well as the metal sections manufactured from the tape, based on the specific needs.

The tape could also be designed asymmetrically along its longitudinal axis.

The design of the tape which includes at least two metal strips per tape layer, enables the creation of virtually any metal tape design with predetermined thicknesses for edge bands EB, central band CB, and possible transition bands TB. This facilitates the optimization of the tape's cross-sectional profile. As such, the tape could be used to manufacture lighter metal sections with variable wall thickness across the cross-section. For instance, by choosing suitable thicknesses for the base layer 11, the reinforcement layer 12, and potentially one or more inner reinforcement layers 14 of the tape, the profile of the cross-section of the metal section produced from this tape could be optimized (achieving variable wall thickness across the cross-section) while maintaining the appropriate mechanical strength of both the tape and the metal sections produced from it. These can be tailored to suit specific metal structures.

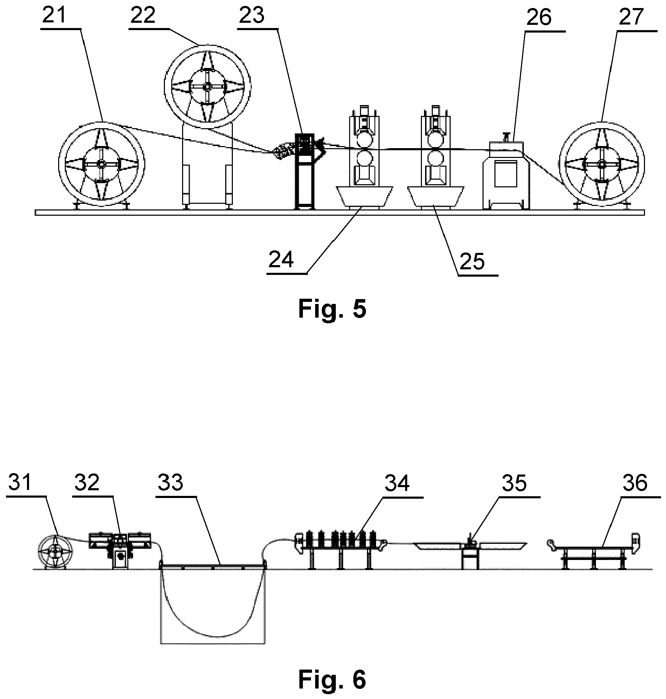

Fig. 5 shows an embodiment of a manufacturing installation for producing a metal tape composed of two metal strips differing in width (D, d), and potentially also in thickness. The manufacturing installation comprises a series of devices positioned sequentially, including uncoilers 21, 22 (one for each metal strip), a positioning guide 23 for the metal strips, a station for bonding the metal strips (equipped with two linear welding machines 24, 25), a roller straightener 26, and a winder 27.

The production process begins with the uncoilers 21, 22 unrolling the metal strips that will form the individual layers of the tape. The unrolled portions of the strips are then overlaid such that they are in contact with each other. This assembly is introduced into the positioning guide 23, where the mutual position of the metal strips is determined to produce a tape with edge bands CB of the desired width.

The positioned layers (metal strips) are then permanently bonded at the bonding station, which is equipped with two inline welding machines 24, 25. As shown in Fig. 5, the bonding station may comprise a first welding machine 24, where an initial weld is performed, and a second welding machine 25 located downstream from the first, where a second weld is made.

Following the application of two parallel welds to permanently bond the metal layers, the tape can then be straightened using an inline straightener 26. This process helps to eliminate any irregularities that may have arisen during welding.

The finished metal tape can then be wound into coils using the winder 27, or it may be directly subjected to further processing steps (without the need for winding). The tape, which can be produced in virtually any length, can then be stored and transported in a coil form.

Similarly, tapes composed of three or more layers of metal -- that is, tapes with at least one inner reinforcement layer 14 -- can also be produced. For example, to manufacture a strip comprising three metal layers (the base layer 11, the reinforcement layer 12, and the inner reinforcement layer 14 situated between them), two adjacent metal layers might be permanently bonded first. The resulting layered structure can then be permanently bonded to a third metal layer, which could be either the base layer 11 or the reinforcement layer 12. This process can be implemented on an industrial scale -- as a continuous process, utilizing virtually any number of metal strips for the layers of the produced tape. This significantly enhances the production of tapes with variable thickness across the cross section.

This type of tape is particularly well-suited for the production of metal sections with variable wall thickness on the cross section. Fig. 6 shows, in an embodiment, the technological sequence for manufacturing such metal sections from the previously described tape. The manufacturing installation includes, arranged sequentially, the following pieces of equipment: an uncoiler 31 for the tape, a contactor 32, a length compensation station 33, a profiling station 34, a cutting station 35, and a folding station 36.

The uncoiler 31, used for unrolling the tape, is a critical component of the manufacturing setup when tapes are supplied in a coiled form. If the tape is provided to the line in a straight (uncoiled) form, it can be provided directly to the contactor 32 for permanent bonding. The preferred method of bonding is by welding or heat sealing the end of one tape to the beginning of the next. This method reduces material losses and downtime associated with reconfiguring the line for a new tape. Following the bonding process, the tape moves to a length compensation station 33. Its purpose is to manage controlled tension of the tape between the uncoiling process and the downstream manufacturing equipment. It also provides control of the tape overhang. If the overhang increases, the station slows down (or brakes) the uncoiling drive. If the overhang decreases, the brake of the uncoiling drive is loosened or released. This cycle repeats continuously, maintaining a controlled tape tension. By incorporating the length compensation station 33 into the manufacturing setup in an appropriate manner, constant tape tension can be maintained at the profiling station 34.

Directly from the length compensation station 33, the tape is transferred to the profiling station 34. Here, the tape undergoes bending using multiple pairs of profiling rollers. Each pair consists of a concave roller and a convex roller, installed in what are referred to as "shaping cages". As a result of this bending, the tape gradually undergoes permanent deformation. The central part of the tape deforms under the action of the convex rollers, while the edges deform under the action of the concave rollers of each pair.

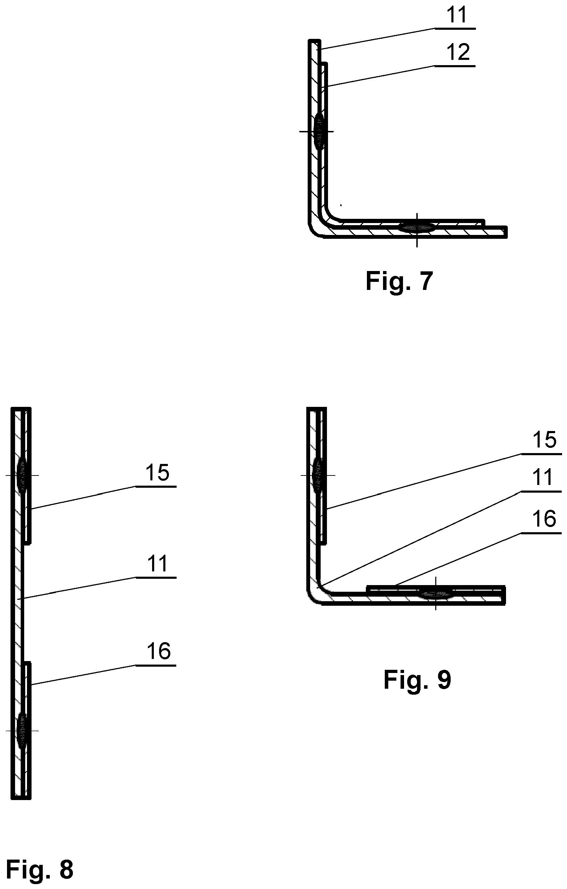

By passing the tape between the aforementioned rollers, a gradual bending of the tape arms occurs, forming a metal section. For instance, a metal section with equal arms could be formed, as shown schematically in Fig. 7, in a cross-sectional view.

The metal section that is formed is then transferred to the cutting station 35. This station may be equipped with a flying circular saw, used to cut the metal section into segments of a pre-specified length. These metal sections can then be moved to the folding station 36, where they are assembled into bundles. These bundles can then be stored or sent directly to customers.

The developed method of producing metal sections with variable wall thickness allows for the creation of metal sections with minimized material losses. It also helps in reducing production downtime that is usually associated with reconfiguring the line with a new tape. This is made possible by appropriately integrating the contactor 32 into a single process line. The contactor 32 is used for butt-welding the end of one tape with the beginning of the next one (a new portion of raw material).

In addition to these benefits, the specially designed tape, comprising at least two layers (metal strips) of differing width, simplifies the production process for tapes with variable thickness and the subsequent creation of metal sections from these tapes. The developed method eliminates the need for milling or rolling in the tape to achieve variable wall thickness. Instead, this feature is incorporated by combining appropriate layers: the base layer, the reinforcement layer, and optionally one or more internal reinforcement layers.

As such, the method according to this invention is suitable for manufacturing tapes and metal sections with varying cross-sections. These products can be adapted to specific structures, such as cabinets or storage racks.

### First embodiment of the metal section

This embodiment involves two metal strips. The first strip 11 has a width of 32.4 mm and a thickness of 0.8 mm and is used for the base layer of the tape. The second strip 12 is 28.6 mm wide and 0.5 mm thick and is used for the reinforcement layer of the tape. Each strip is wound on spools in the form of metal coils and is fed from separate unwinders. This allows the metal strips to come into contact with each other, forming a layered structure.

This structure is then introduced into a guide that ensures the mutual positioning of the strips. This forms a thickened central band (CB) and two thinner edge bands (EB) of equal width, as shown in Fig. 1.

The arranged strips are then fed into the first heat sealer, where the first heat seal is formed. This seal is an interrupted seam located on one side of the tape's axis of symmetry. The strips then proceed to the second heat sealer, where a second interrupted seam is formed parallel to the first one. This second seam is positioned approximately 17.4 mm away from the first heat seal, mirroring its distance from the tape's axis of symmetry.

Following this process, the tape is straightened using a linear straightener. Once straightened, the tape is moved to the metal section production line where it is butt-welded with a tape of identical size and design from the previous production batch.

Next, the tape is transported to the length compensation station. Here, a zero-tension production buffer of 4 m in length is created. From this point, the strip is delivered to the cold profiling station. Here, a symmetrical metal section is formed from the tape, featuring equal arms that form a right angle. The base layer of the tape is positioned on the outside of the metal section, as displayed in Fig. 7.

Finally, the metal section is cut into 1.8 m lengths and stacked into bundles, which are then secured with foil.

### Second embodiment of the metal section

This embodiment involves three metal strips. The first strip, intended for the base layer of the tape, has a width of 36 mm and a thickness of 0.8 mm. The other two strips 15, 16, each have a width of 12 mm and a thickness of 0.4 mm. They are used for the reinforcement layer of the tape. Each strip is wound onto spools in the form of metal coils and fed from separate unwinders, enabling the metal strips to come into contact and form a layered structure.

This layered structure is inserted into a guide, which allows the mutual positioning of the strips. As a result, two thickened edge bands (EB) and a thinner central band (CB) are formed, as demonstrated in Fig. 8 showing the fifth embodiment of the metal tape.

The arranged strips are then transported to the first heat sealer to create the first heat seal. This seal takes the form of an interrupted seam and is located on the axis of symmetry of one strip positioned near the edge. Subsequently, the strips are moved to the second heat sealer where a second interrupted seam is formed, this time on the axis of symmetry of the second strip placed near the edge.

After this process, the tape is straightened using a linear straightener. The straightened tape is then moved to the metal section production line, where it is butt-welded with a tape identical in size and design from the previous production batch.

Next, the tape is transported to the length compensation station, where a zero-tension production buffer of 4 m in length is produced. From this station, the tape is sent to the cold profiling station. Here, a symmetrical metal section is formed from the tape, featuring equal arms forming a right angle. The base layer of the tape is on the outside of the metal section, as shown in Fig. 9.

Finally, the metal section is cut into 1.8 m segments and stacked into bundles. These bundles are then secured with foil.

While the invention has been described with respect to a limited number of embodiments, it will be appreciated that many variations, modifications and other applications of the invention may be made. Therefore, the claimed invention as recited in the claims that follow is not limited to the embodiments described herein.

## Claims

1. A metal section formed from a metal tape shaped to form a cross-sectional profile of the metal section, wherein the metal tape has a layered structure comprising:
- a base layer (11) formed of a first metal strip having a first width (D); and
- at least one reinforcement layer (12, 14, 15, 16) formed of at least one second metal strip having a second width (d), wherein the second width (d) is smaller than the first width (D), wherein the reinforcement layer (12, 14, 15, 16) is permanently bonded to the base layer (11) by means of bonding means (13).

2. The metal section according to claim 1, wherein the metal tape is symmetrical with respect to its longitudinal axis, and wherein the layers (11, 12) are arranged such that the base layer (11) and the reinforcement layer (12) overlap within a central band (CB), and wherein the base layer (11) extends beyond the reinforcement layer (12) within edge bands (EB).

3. The metal section according to claim 1 wherein the metal tape is symmetrical with respect to its longitudinal axis, and wherein layers (11, 15, 16) are arranged such that the reinforcement layers (15, 16) are located at side edges of the base layer (11).

4. The metal section according to claim 1 wherein the metal tape is asymmetrical with respect to its longitudinal axis.

5. The metal section according to any claims 1 to 3 wherein the metal tape further comprises at least one inner reinforcement layer (14) between the reinforcement layer (12) and the base layer (11), wherein the inner reinforcement layer (14) has a third width (d1) that is smaller than the first width (D) and larger than the second width (d).

6. The metal section according to any of previous claims, wherein the layers (11, 12, 14, 15, 16) of the metal tape have the same thickness.

7. The metal section according to any of the claims from 1 to 5 wherein the layers (11, 12, 14, 15, 16) of the metal tape have different thicknesses.

8. The metal section according to any of previous claims, wherein the bonding means (13) of the layers (11, 12, 14, 15, 16) have a form of a welding joint, a soldering joint, a weld, an adhesive and/or rivets.

9. The metal section according to any of claims 1 to 7 wherein the bonding means (13) form a continuous bonding line.

10. The metal section according to any of claims 1 to 7 wherein the bonding means (13) form a series of point joints.

11. A method for manufacturing a metal section, the method comprising the steps of:
- producing a metal tape by:
- providing a first metal strip (11) having a first width (D) for use as a base layer of the tape,
- providing at least one second metal strip (12, 14, 15, 16) having a second width (d) smaller than the first width (D) for use as a tape reinforcement layer,
- arranging the strips (11, 12, 14, 15, 16) to form a stack of longitudinally arranged layers, forming tape areas of different cross-sectional thickness,
- bonding the metal strips permanently with each other by bonding means (13) to form the metal tape having a varying cross-sectional thickness;
- forming the metal section from the metal tape by cold forming the metal tape, by introducing the metal tape into a forming station (34) comprising a plurality of pairs of profiling rollers and guiding the metal tape through the profiling rollers, thereby gradually bending the tape to the desired cross-sectional shape of the metal section.

12. The method according to claim 11, further comprising providing at least one inner reinforcement layer (14) between the reinforcement layer (12) and the base layer (11), wherein the inner reinforcement layer (14) has a third width (d1) smaller than the first width (D) and larger than the second width (d).

13. The method according to claim 11 or 12, comprising bonding the metal strips (11, 12, 14, 15, 16) by welding, adhesive welding and/or riveting.

14. The method according to any of claims 11 to 13, comprising feeding the tape to be shaped through a length compensation station (33), wherein a buffer portion of the tape is formed.
